# EUROPEAN PATENT APPLICATION

(11) **EP 4 589 747 A1**
(43) Date of publication of application: **23.07.2025**
(21) Application number: 23865723.3
(22) Date of filing: 01.08.2023
(51) Int. Cl.: H01M 50/287, H01M 10/42, H01M 50/278, H01M 50/298, H01M 50/24, H01M 50/262, H01M 50/211

(54) **CELL MONITORING CIRCUIT CAPABLE OF WIRELESS COMMUNICATION AND BATTERY MODULE PROVIDED WITH SAME**

(30) Priority: 16.09.2022 KR 20220117169
(71) Applicant: LG Energy Solution, Ltd., Seoul 07335 (KR)
(72) Inventor: LEE, Hee Su, Daejeon 34122 (KR); AN, Hyuk, Daejeon 34122 (KR); SHIN, Eungyu, Daejeon 34122 (KR); YUN, Seunghyun, Daejeon 34122 (KR); PARK, Won Kyoung, Daejeon 34122 (KR); OH, Jaehun, Daejeon 34122 (KR)
(74) Representative: Hoffmann Eitle
(86) International application number: PCT/KR2023/011271
(87) International publication number: WO 2024/058422

(57) **Abstract**

The present invention provides a top plate assembly equipped with cell supervisory circuit installed in a battery module and capable of wireless communication with a master level battery control circuit, and a battery module equipped therewith. The top plate assembly comprises: a top plate of metal material; a circuit board accommodating hole provided in a portion of the top plate; a circuit board accommodated in the circuit board accommodating hole; a wireless communication antenna mounted on the circuit board; and a housing of non-metal material accommodating and fixing the circuit board to the top plate. The circuit board accommodating hole is provided with an anti-noise groove formed by cutting out the top plate of the metal material to secure a predetermined separation distance from the wireless communication antenna. The housing comprises: a lower housing of resin material supporting a lower portion of the circuit board from a bottom surface of the top plate; and an upper housing of resin material covering the circuit board and the circuit board accommodating holes from an upper surface of the top plate.

## Description

### [TECHNICAL FIELD]

The present invention relates to a cell supervisory circuit, and more particularly, to a master level battery control circuit and a wirelessly connectable cell supervisory circuit installed in a battery module, and a battery module equipped therewith.

### [BACKGROUND ART]

In order to increase the driving range of an electric vehicle, the number of battery modules installed per vehicle must be increased, and the energy density of cells must also be increased within a limited space.

As the number of battery modules mounted in a vehicle increases, the number of modules that one battery control circuit must control increases. However, when the battery control circuit is connected via wired connection to each cell supervisory circuit installed in a large number of modules, the wiring structure becomes more complicated and damage to the wiring may lead to a fire. That is, as the energy density of the cell increases, the safety risk also increases.

In addition, in order to establish a wired connection between the cell supervisory circuit installed on the battery module and the battery control circuit, a connector or terminal exposed to the outside of the casing must be provided on the casing of the battery module. As a result, venting gas leaking from the cell discharged to the outside through the connector or terminal may possibly catch fire upon contact with outside air.

Korea Patent Application Publication No. 2021-0058540, Korea Patent Application Publication No. 2017-0117118, and Korea Patent Application Publication No. 2021-0149482 disclose technologies for connecting a battery control circuit and a cell supervisory circuit via wireless communication. However, the above documents fail to disclose any structure to prevent venting gas leaking from the cell from being discharged to the outside.

In addition, in order to protect the cells accommodated inside the battery module, the casing of the battery module is made of metal to ensure its strength. However, a casing of metal material interferes with the wireless communication between the cell supervisory circuit of the battery module and the battery control circuit. However, the above documents fail to provide any solution to these wireless communication problems.

### [Disclosure]

### [Technical Problem]

_The present invention was developed to solve the above-described problems, and it is an object of the present invention to provide a cell supervisory circuit and a battery module equipped with the same that is capable of wireless connection between the cell supervisory circuit and the battery control circuit without wiring therebetween.

In addition, it is an object of the present invention to provide a battery module that ensures the strength of the casing of the battery module without interfering with wireless communication between the cell supervisory circuit and the battery control circuit.

Additionally, it is an object of the present invention to provide a battery module having a structure that facilitates installation of a cell supervisory circuit.

In addition, it is an object of the present invention to provide a battery module that prevents moisture from infiltrating the interior through the installation structure of the cell supervisory circuit.

Additionally, it is an object of the present invention to provide a battery module with a cell supervisory circuit installed in a manner to facilitate maintenance.

In addition, it is an object of the present invention to a battery module capable of delaying the propagation of flame as much as possible in case of fire.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [Technical Solution]

In order to solve the above-described problems, a circuit board on which a cell supervisory circuit (slave level) is implemented and a wireless communication antenna is mounted is installed on a top plate assembly covering an upper portion of a battery module according to the present invention. By placing a wireless communication antenna in the upper portion of the battery module, wireless communication between the cell supervisory circuit and a battery control circuit (master level) is further facilitated.

The top plate assembly includes a top plate of metal material with a circuit board accommodating hole provided in some region thereof. When the top plate is made of such metal material, sufficient rigidity of the top plate is maintained.

The circuit board accommodating hole may be substantially rectangular with a long side and a short side. The top plate may also be rectangular with a long side and a short side. The circuit board accommodating hole may be arranged at a center portion of the top plate, and the directions of the long side and short side of the circuit board accommodating hole may be arranged to correspond to those of the long side and short side of the top plate. Accordingly, by forming the circuit board accommodating hole to have a sufficient distance between an outer edge of the top plate and an inner edge of the top plate defined by the circuit board accommodating hole, the degradation of the rigidity of the top plate due to the formation of the circuit board accommodating hole may be prevented.

The shape of the outer edge of the circuit board may substantially correspond to that of the inner edge of the top plate defining the circuit board accommodating hole. Accordingly, sufficient rigidity of the top plate may be secured by minimizing the size of the circuit board accommodating hole.

The circuit board is accommodated in the circuit board accommodating hole. Accordingly, the top plate of metal material may be prevented from causing failure in wireless communication of the circuit board.

The top plate assembly includes a housing accommodating and fixing the circuit board to the top plate.

The housing may be made of a material that accommodates the circuit board to protect the same without affecting the wireless signal generated from the wireless communication antenna mounted on the circuit board.

The housing may include non-metal materials.

The non-metal material may be a resin material, specifically a synthetic resin material.

The housing may include a lower housing that supports the lower portion of the circuit board from the bottom surface of the top plate, and an upper housing that covers the circuit board and the circuit board accommodating hole from the upper surface of the top plate.

The circuit board accommodating hole is provided with an anti-noise groove formed by cutting a portion of the top plate of the metal material to ensure a predetermined separation distance between the edge of the wireless communication antenna and the members constituting the top plate.

The location of the wireless communication antenna mounted on the circuit board may be about the outer edge of the circuit board. Accordingly, it is possible to minimize the influence of radio waves for wireless communication on other elements of the circuit board.

The wireless communication antenna may be mounted closest to a first portion of the outer edge of the circuit board.

The anti-noise groove may be formed at the inner edge of the top plate corresponding to a first portion of the edge of the circuit board adjacent to where the wireless communication antenna is mounted.

The anti-noise groove may have a shape where the inner edge of the top plate is further recessed toward the outer edge of the top plate.

The anti-noise groove may be defined by a portion of the inner edge of the top plate further recessed in a manner that the portion of the inner edge of the top plate is further spaced apart from the first portion of the outer edge of the circuit board corresponding to the portion of the inner edge of the top plate.

The anti-noise groove may be formed in a manner that the anti-noise groove is in communication with the circuit board accommodating hole.

The separation distance maintained by the anti-noise groove may be equal to or greater than 10mm. When a separation distance of 10mm or more is maintained, the phenomenon of noise occurring due to the metal member constituting the top plate interfering with the wireless signal of the wireless communication antenna may be significantly reduced, thereby facilitating wireless communication with the battery control circuit.

The separation distance maintained by the anti-noise groove may be equal to or smaller than 20mm. When the separation distance exceeds 20mm, only the rigidity of the top plate is reduced while obtaining almost no further reduction in the noise.

The lower housing may cover the lower portion of the circuit board accommodating hole.

Additionally, the lower housing may cover the lower portion of the anti-noise groove.

A circuit board connector connected to a sensor detecting the temperature of the battery module may be mounted on the edge of the circuit board.

A connector accommodating groove formed by partially cutting out the top plate may be provided at a portion of the top plate corresponding to an edge portion of the circuit board where the circuit board connector is mounted. Accordingly, access to the circuit board connector may be facilitated.

A top cable connecting the circuit board connector and the sensor may be installed on the bottom surface of the top plate.

The top cable may include an fPCB cable arranged to exit the housing, i.e. the lower housing. The top cable may be attached to the bottom surface of the top plate.

The lower housing may include a base member and an inner wall member extending upward from the base member.

The circuit board may be accommodated in a space provided inside the inner wall member of the base member.

The inner wall member may have a loop shape corresponding to the circuit board. The inner wall member may have a closed loop shape or a loop shape with some sections removed.

The base member may be provided with an internal snap-fit that extends upward from the base member and is elastically fastened to the outer circumferential surface of the circuit board.

A hook-shaped locking portion may be provided at the upper end portion of the internal snap-fit. The locking portion may protrude further inward than the inner wall member to support the upper surface of the edge of the circuit board accommodated in the inner wall member.

The internal snap-fit allows the handling of the lower housing and circuit board with the lower housing and circuit board temporarily assembled during the assembly process of the top plate assembly of the battery module, thereby making the assembly process more convenient. Additionally, by adopting a snap-fit structure, the circuit board may be easily detached from the lower housing during maintenance of the cell supervisory circuit that may occur in the future.

The inner wall member may penetrate the top plate through the circuit board accommodating hole.

When the upper end portion of the inner wall member is placed higher than the upper surface of the top plate, the infiltration of moisture to the circuit board along the upper surface of the top plate may be effectively prevented.

The base member may be provided with an external snap-fit that extends upward from the base member and is elastically fastened to the inner edge of the top plate.

A locking portion provided at the upper end portion of the external snap-fit may protrude further outward than the inner wall member to support the upper surface of the top plate.

At least a portion of the outer side portion provided outside the inner wall member of the base member may be in contact with or fixed to the bottom surface of the top plate.

Therefore, when the lower housing is inserted upward from the lower side of the circuit board accommodating hole of the top plate, the outer side portion of the base member may regulate the upward movement of the lower housing, and the hook-shaped locking portion at the upper end of the external snap-fit may regulate the downward movement of the lower housing. Accordingly, the lower housing may remain temporarily fastened to the top plate, making the assembly and maintenance processes more convenient.

The outer side portion of the base member may cover the lower portion of the anti-noise groove. Since the anti-noise groove is a structure in which the metal material is removed to reduce noise generation in the wireless communication antenna signal, the lower housing of resin material may cover the area instead.

A groove exposing the connector accommodating groove may be provided in the area corresponding to the connector accommodating groove in the lower housing. The groove exposing the connector accommodating groove may be formed by removing portions of the base member and the inner wall member of the lower housing.

The upper housing may cover the upper portion of the circuit board accommodating hole.

The upper housing may cover the upper portion of the anti-noise groove.

The upper housing may cover the upper portion of the connector accommodating groove.

The upper housing may include: a seating member seated on the upper surface of the top plate; an outer wall member extending upward from an inner portion of the seating member and surrounding the inner wall member of the lower housing; and a cover member connected to an upper portion of the outer wall member and covering the circuit board and the circuit board accommodating hole.

A downward step may be provided at the lower portion of the outer edge of the seating member. Accordingly, the sealing ability between the edge of the upper housing and the upper surface of the top plate may be further increased to prevent external moisture infiltration.

The upper surface area of the top plate that is inside the downward step may have a step shape that protrudes slightly upward compared to the outer area. Accordingly, the effect of preventing external moisture infiltration may be further increased.

The outer wall member of the upper housing may be placed further outward than the inner wall member of the lower housing.

The upper housing may be fixed to the top plate through a fastening member.

The fastening member may penetrate the seating member and the top plate to be fixed to the outer side portion provided on the outside of the inner wall member of the base member. When assembled using the fastening member described above with the lower housing pre-fastened to the top plate through an external snap-fit, the assembly process may be simpler. In addition, when accessing the circuit board for maintenance, the lower housing remains temporarily fastened to the top plate even when the fastening member is separated and the upper housing is lifted, thereby making the work more convenient.

### [Advantageous Effects]

The connection structure between the cell supervisory circuit and the battery control circuit according to the present invention allows wireless connection therebetween such that wiring is not necessary. As a result, the structure and the assembly of the battery pack become simpler, and accidents that may occur due to damage to the wiring may be prevented.

In addition, according to the present invention, by arranging a cell supervisory circuit in the upper portion of a battery module and providing an anti-noise groove on a top plate, sufficient strength of the casing of the battery module made of metal is maintained, and the wireless communication between the cell supervisory circuit and a battery control circuits may be enhanced without any problem as well..

In addition, according to the present invention, a cell supervisory circuit is installed on the plate that constitutes the casing of a battery module to facilitate assembly and installation, and external moisture may be prevented from infiltrating the interior through this installation structure as well.

In addition, according to the present invention, when a cell supervisory circuit is installed in a simple structure on a top plate of a battery module, the access to and the maintenance of the corresponding parts are facilitated.

In addition, according to the present invention, even though a circuit board accommodating hole is provided on a top plate of a battery module for installing a cell supervisory circuit therein, the inside and the outside of the casing are completely isolated such that the propagation of flame may be delayed as much as possible in case of fire starting inside the battery module to ensure sufficient time for passengers to escape.

In addition to the advantageous effects described above, other specific effects of the present invention will be described further while describing specific details of the present invention.

### [DESCRIPTION OF DRAWINGS]

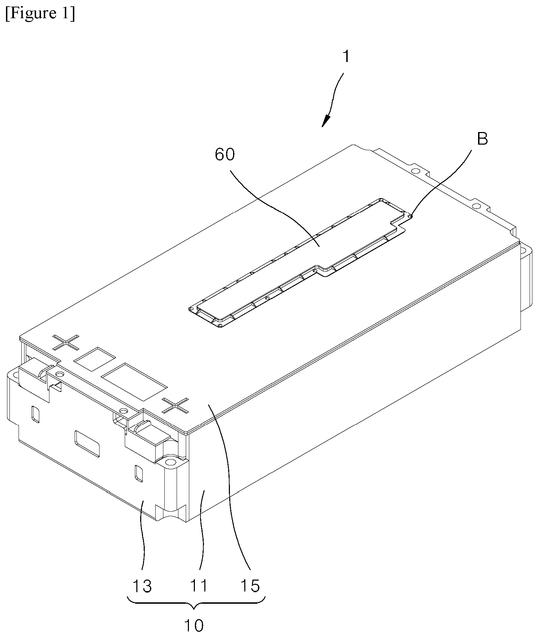

FIG. 1 is a perspective view of a battery module equipped with a cell supervisory circuit capable of wireless communication according to the present invention.

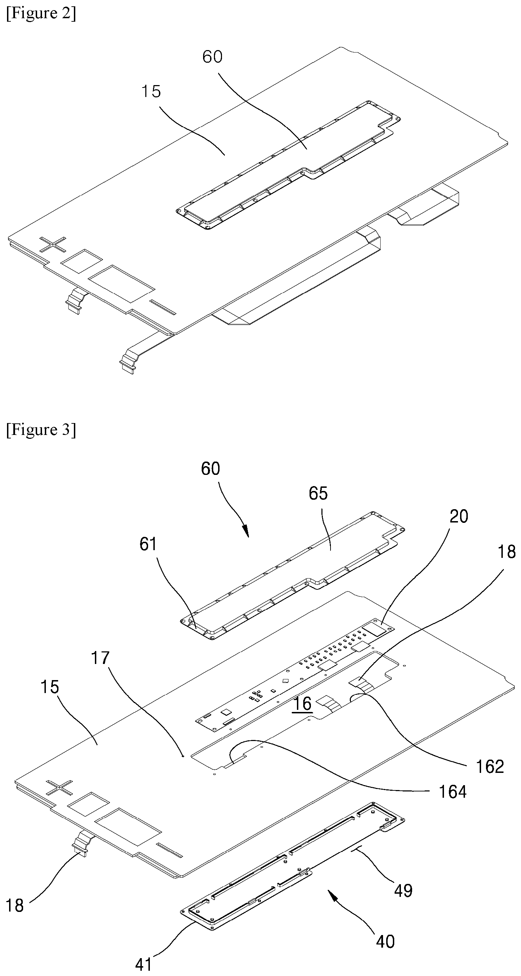

FIG. 2 is a perspective view of the top plate assembly of the battery module of FIG. 1.

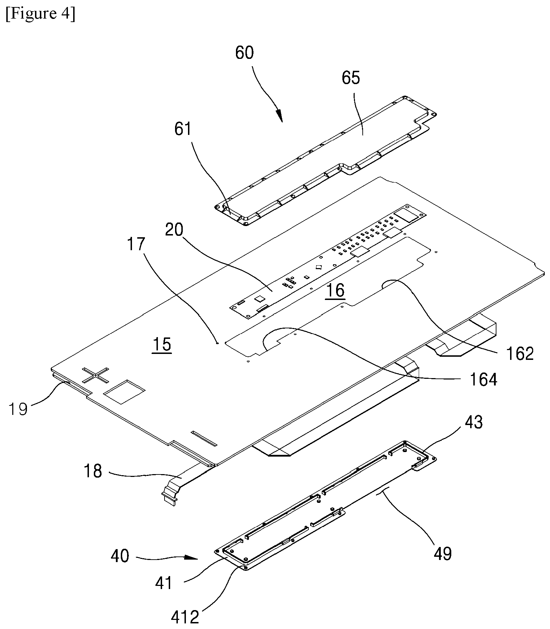

FIGS. 3 and 4 are exploded perspective views of the top plate assembly of FIG. 2.

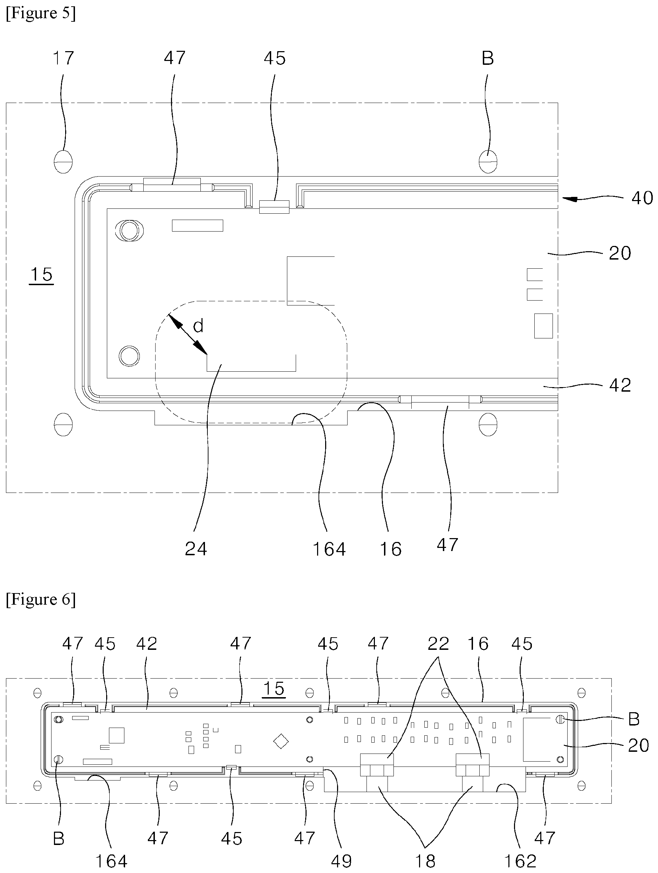

FIG. 5 is an enlarged plan view showing an area where a wireless communication antenna is located with a lower housing accommodating a circuit board fastened to the top plate.
FIG. 6 is a plan view of a lower housing accommodating a circuit board fastened to the top plate.
FIG. 7 is an enlarged view of the top plate assembly in cross-section taken along the line VII-VII of FIG. 1.

### [Description of Reference Numerals]

1: battery module; 10: casing; 11: base plate; 13: end plate; 15: top plate(metal, aluminum); 16: circuit board accommodating hole; 162: connector accommodating groove; 164: anti-noise groove; 17: plate fastening hole; 18: top cable(fPCB cable); 19: heat dissipation member(elastic deformable material); 20: circuit board; 22: circuit board connector; 24: wireless communication antenna; 40: lower housing(synthetic resin); 41: base member; 412: housing fastening hole; 43: inner wall member; 45: internal snap-fit; 47: external snap-fit; 49: groove exposing the connector accommodating groove; 60: upper housing(synthetic resin); 61: seating member; 612: downward step; 63: outer wall member; 65: cover member; d: separation distance; B: fastening member(bolt); C: cell

### [Mode for Invention]

The above-described objects, features and advantages will be described in detail hereinafter with reference to the accompanying drawings such that those skilled in the art will be able to implement the technical idea of the present invention. In describing the present invention, when it is determined that a detailed description of a known element unnecessarily obscures the principles of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, arranging an element at an upper portion (or a lower portion) of an element or arranging an element at a top (or a bottom) of an element refers to not only arranging an element to be in contact with an upper surface (or a lower surface) but also to arranging an element above an upper surface (or a lower surface) with another element interposed therebetween.

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to having component A, component B or both components A and B unless specifically stated otherwise, and "C to D" refers to from equal to or higher than C to equal to or lower D unless specifically stated otherwise.

Hereinafter, preferred embodiments of the present invention will be described in detail with reference to the accompanying drawings.

A battery module 1 equipped with a slave level cell supervisory circuit capable of establishing a wireless communication with a master level battery control circuit (not shown) in an embodiment according to the present invention. The cell supervisory circuit is implemented on a circuit board 20 on which a wireless communication antenna 24 is mounted. The circuit board 20 is installed on an upper surface of the battery module 1. Accordingly, the cell supervisory circuit may smoothly communicate wirelessly with the battery control circuit.

The battery module 1 may have a rectangular parallelepiped shape in which the length (depth) in a front-to-rear direction is longer than the length (width) in a left-to-right direction and the length (height) in a top-to-bottom direction is shorter than the width. The battery module 1 may have a structure in which a plurality of cells "C" are accommodated in the casing 10 of the rectangular parallelepiped shape above.

The casing 10 includes a base plate 11 of a metal material (e.g. aluminum material) having bottom and two sides of the rectangular parallelepiped formed integrally, a pair of end plates 13 that cover the front surface and the rear surface of the battery module 1, respectively, and a top plate 15 covering an upper surface of the battery module 1.

The base plate 11 may be manufactured by bending a metal sheet. The end plates 13 may include a sensor that detects the temperature of the battery. The top plate 15 may include a circuit board 20. The circuit board 20 and the sensor may be electrically connected through a top cable 18 attached to the bottom surface of the top plate 15.

The top plate 15 may constitute an assembly including the circuit board 20 and housings 40 and 60 for accommodating the circuit board 20.

The top plate 15 may be made of metal sheet material to ensure the rigidity of the casing 10. Metal materials interfere with wireless communication and cause noise. Accordingly, a circuit board accommodating hole 16 is provided in the top plate 15 to accommodate the circuit board 20.

The top plate 15 may have a substantially rectangular shape with long sides extending in the front-to-rear direction and short sides extending in the left-to-right direction. **In** addition, the circuit board accommodating hole 16 may also have a substantially rectangular shape with long sides extending in the front-to-rear direction and short sides extending in the left-to-right direction. The circuit board accommodating hole 16 is disposed in the center portion of the top plate 15 such that the distance between the inner circumference of the top plate 15 defined by the circuit board accommodating hole 16 and the outer circumference of the top plate 15 is maximized. As a result, it is possible to prevent or minimize the circuit board accommodating hole 16 from deteriorating the rigidity of the top plate 15.

The circuit board 20 may have a shape and size corresponding to the circuit board accommodating hole 16. That is, the circuit board 20 may have a rectangular shape with long sides extending in the front-to-rear direction and short sides extending in the left-to-right direction.

A wireless communication antenna 24 may be mounted on the long side edge of the circuit board 20. The wireless communication antenna 24 is mounted on the edge of the circuit board 20 to minimize signal interference with other elements within the circuit board.

The top plate 15 is made of metal material and may cause noise in the signal of the wireless communication antenna 24. Accordingly, an anti-noise groove 164 formed by further cutting out the top plate 15 and enlarging the circuit board accommodating hole 16 may be provided at a portion of the inner circumference of the top plate 15 adjacent to the wireless communication antenna 24.

The anti-noise groove 164 allows that the metal member constituting the top plate 15 does not exist in a space spaced apart from the wireless communication antenna 24 by a predetermined distance d.

The separation distance d may be equal to or greater than 10mm. When the separation distance d is less than 10mm, the metal material of the top plate 15 causes noise in the wireless communication signal. That is, when the separation distance d of 10mm or more is utilized, the phenomenon of noise occurring in the wireless signal of the wireless communication antenna 24 due to interference of the metal member constituting the top plate 15 may be significantly reduced, thereby improving the wireless communication with the battery control circuit.

The separation distance d maintained by the anti-noise groove 164 may be 20mm or less. When the separation distance d exceeds 20mm, only the rigidity of the top plate 15 is reduced while obtaining almost no further reduction in the noise.

It is preferable that the wireless communication antenna 24 is provided at the long side edge of the circuit board 20. Accordingly, the four sides of the rectangular circuit board accommodating hole 16 are adjacent to and face the four sides of the circuit board 20 such that the front-to-rear and the left-to-right positions of the circuit board 20 may be restricted by the inner side of the top plate 15 defining the circuit board accommodating hole 16.

For example, when the wireless communication antenna 24 is provided on the short side edge of the circuit board 20, the anti-noise groove 164 should be provided on the short side of the circuit board accommodating hole 16 to secure the separation distance d from the wireless communication antenna 24. However, when the width of the anti-noise groove 164 is larger than the width of the short side of the circuit board accommodating hole 16, the entirety of the inner circumference of the top plate 15 corresponding to the short side of the circuit board accommodating hole 16 is cut to form an anti-noise groove 164. Then, the inner side of the top plate 15 corresponding to the short side of the circuit board accommodating hole 16 is no longer able to restrict the position of the short side edge of the circuit board 20 on which the wireless communication antenna 24 is mounted.

The circuit board 20 is connected to a sensor that detects the temperature of the battery module 1. As described above, the sensor may be installed on the end plate 13, and connected to the circuit board 20 via the top cable 18. The top cable 18 may be, for example, a flexible printed circuit board (FPCB) fixed to the bottom surface of the top plate 15 in a manner that the top cable 18 exits the circuit board accommodating hole 16.

The circuit board 20 may have a circuit board connector 22 connected to the top cable 18. The circuit board connector 22 is provided at the edge of the circuit board 20, and the inlet of the circuit board connector 22 may be arranged to face a direction laterally away from the edge of the circuit board 20.

A connector accommodating groove 162 formed by further cutting out the inner side portion of the top plate 15 may be provided at a portion of the circuit board accommodating hole 16 corresponding to the edge portion of the circuit board 20 where the circuit board connector 22 is mounted. Accordingly, the connection between the top cable 18 and the circuit board connector 22 may be facilitated.

It is also preferable that the circuit board connector 22, similar to the wireless communication antenna 24, is provided at the long side edge of the circuit board 20. Accordingly, despite the connector accommodating groove 162 provided there at, the four sides of the rectangular circuit board accommodating hole 16 are adjacent to and face the four sides of the circuit board 20 such that the front-to-rear and the left-to-right positions of the circuit board 20 may be restricted by the inner circumference of the top plate 15 defining the circuit board accommodating hole 16.

In order to fix the circuit board 20 to the top plate 15 while placed in the circuit board accommodating hole 16, the top plate assembly further comprises: a lower housing 40 supporting the lower portion of the circuit board 20 from the bottom surface of the top plate 15; and an upper housing 60 covering the circuit board 20 and the circuit board accommodating hole 16 from the upper surface of the top plate 15. Since the circuit board 20 is required to establish a wireless communication, the lower housing 40 and upper housing 60 may be manufactured with materials that do not cause interference with wireless communication. For example, the material may be a synthetic resin material.

The lower housing 40 and the upper housing 60 accommodate, fix to the top plate 15 and protect the circuit board 20 without affecting the wireless signal generated from the wireless communication antenna 24 mounted on the circuit board 20.

The lower housing 40 may cover the lower portion of the circuit board accommodating hole 16. Additionally, the lower housing 40 may cover the lower portion of the anti-noise groove 164. Moreover, the lower housing 40 may expose the lower portion of the connector accommodating groove 162 without covering the same.

The lower housing 40 may support the bottom surface of the circuit board 20 and the edges of the circuit board 20.

The lower housing 40 may include a base member 41 and an inner wall member 43 extending upward from the base member 41. The inner wall member 43 may have a rectangular loop shape corresponding to the circuit board 20. The inner wall member 43 may be a closed loop shape or a loop shape with some sections removed.

The circuit board 20 may be accommodated in the space provided inside the inner wall member 43 of the base member 41. Accordingly, the base member 41 may support the bottom surface of the circuit board 20, and the inner wall member 43 may surround and support the edge of the circuit board 20.

The base member 41 may be provided with an internal snap-fit 45 that extends upward from the base member 41 and is elastically fastened to the outer circumferential surface of the circuit board. At least the lower portion of the internal snap-fit 45 may also be connected to the inner wall member 43.

A hook-shaped locking portion may be provided at the upper end portion of the internal snap-fit 45. The locking portion protrudes further inward than the inner wall member 43. Accordingly, when inserting the circuit board 20 into the inner space of the inner wall member 43, the hook-shaped locking portion may be elastically deformed outward to accommodate the circuit board 20, and the locking portion is elastically restored after accommodating the circuit board 20, thereby supporting the upper surface of the circuit board 20 accommodated inside the inner wall member 43.

The internal snap-fit 45 facilitates the assembly process by allowing the lower housing 40 and circuit board 20 to be handled in a pre-assembled state, and facilitates the detachment of the circuit board 20 from the lower housing 40 during the maintenance process.

In the process of installing the lower housing 40 to the top plate 15, the inner wall member 43 may penetrate the top plate 15 through the circuit board accommodating hole 16. Accordingly, the inner wall member 43 may be interposed between the outer circumference of the circuit board 20 and the inner circumference of the top plate 15 which defines the circuit board accommodating hole 16. The inner wall member 43 prevents the edge of the circuit board 20 from directly contacting the top plate 15. In addition, the upper end portion of the inner wall member 43 is placed higher than the upper surface of the top plate 15 such that the infiltration of moisture flowing along the upper surface of the top plate 15 to the circuit board 20 may be effectively prevented.

During the assembly process, when the inner wall member 43 of the lower housing 40 is inserted into the circuit board accommodating hole 16 of the top plate 15, the lower housing 40 may be temporarily fastened to the top plate 15. For this purpose, the base member 41 may be provided with an external snap-fit 47 that extends upward from the base member 41 and is elastically fastened to the inner circumference of the top plate 15 defining the circuit board accommodating hole 16. The lower portion of the external snap-fit 47 may also be connected to the inner wall member 43. The external snap-fit 47 may be provided at a location that does not overlap with the internal snap-fit 45 to prevent mutual interference.

The locking portion provided at the upper end portion of the external snap-fit 47 protrudes further outward than the inner wall member 43 such that the locking portion may be elastically deformed inward when inserting the inner wall member 43 of the lower housing 40 into the circuit board accommodating hole 16. The locking portion is elastically restored after the inner wall member 43 penetrates the circuit board accommodating hole 16 to support the upper surface of the top plate 15.

On the other hand, the portion (inner side portion) of the base member 41 provided inside the inner wall member 43 may support the lower portion of the circuit board 20, and the portion (outer side portion) provided outside the inner wall member 43 may be fixed to the bottom surface of the top plate 15.

That is, when the lower housing 40 is inserted upward from the lower portion of the circuit board accommodating hole 16 of the top plate 15, the outer side portion of the base member 41 may restrict the upward movement of the lower housing 40, the hook-shaped locking portion at the upper end of the external snap-fit may restrict the downward movement of the lower housing. That is, the lower housing 40 is temporarily fastened to the top plate 15 even before using a separate fastening member "B." This provides convenience for assembly and maintenance.

The outer side portion of the base member 41 covers the lower portion of the anti-noise groove 164. The lower housing 40 made of resin material does not interfere with wireless communication of the wireless communication antenna 24.

A groove 49 exposing the connector accommodating groove formed by cutting out the outer side portion of the base member 41 and a portion of the inner wall member 43 is provided at a portion of the lower housing 40 corresponding to the connector accommodating groove 162. That is, the groove 49 exposing the connector accommodating groove does not cover the lower portion of the connector accommodating groove 162 and exposes the same in downward direction. Accordingly, the connection between the top cable 18 and the circuit board connector 22 is facilitated.

The upper housing 60 covers the upper portion of the circuit board accommodating hole 16. The upper housing 60 also covers the upper portion of the anti-noise groove 164 and the upper portion of the connector accommodating groove 162. That is, the upper housing 60 completely covers the hole portion of the top plate 15.

The upper housing 60 includes a seating member 61 that surrounds the circuit board accommodating hole 16, anti-noise groove 164 and connector accommodating groove 162, and is seated on the upper surface of the top plate 15.

The seating member 61 is provided with a hole penetrated by the fastening member "B." In addition, a plate fastening hole 17 also penetrated by the fastening member "B" is also provided in the corresponding portion of the top plate 15. Moreover, the corresponding outer side portion of the lower housing 40 is provided with a housing fastening hole 41 that is fastened to the fastening member "B." The fastening member "B" may be a bolt that penetrates the hole of the seating member 61 and the plate fastening hole 17 and is fastened to the housing fastening hole 41.

A downward step 612 is provided on the lower portion of the outer edge of the seating member 61. Therefore, when the fastening member "B" is tightened, the downward step 612 comes into close contact with the upper surface of the top plate 15. The downward step 612 forms a closed loop. Accordingly, sealing is achieved between the edge of the upper housing 60 and the upper surface of the top plate 15, thereby preventing external moisture infiltration.

The upper housing 60 extends upward from the inner side portion of the seating member 61 and further includes an outer wall member 63 surrounding the inner wall member 43 of the lower housing 40. The outer wall member 63 of the upper housing 60 is disposed further outside than the inner wall member 43 of the lower housing 40.

The upper housing 60 further includes a cover member 65 connected to the upper portion of the outer wall member 63 and covering the circuit board 20.

The upper housing 60 is fixed to the top plate 15 through a fastening member "B." The lower housing 40 is temporarily fastened to the top plate 15 through an external snap-fit 47 with the circuit board 20 accommodated therein. When the upper portion of the top plate 15 covers the lower housing 40 with the upper housing 60 and the fastening member "B" is fastened, the lower housing 40 and the upper housing 60 are closely attached to each other.

During the maintenance of the circuit board 20, the fastening member "B" may simply be unfastened and the upper housing 60 may be lifted. Then, the lower housing 40 remains temporarily fixed to the top plate 15. In this state, tasks such as accessing and replacing the circuit board 20 may be facilitated.

With the upper housing 60 and the lower housing 40 fastened to the top plate 15 and the top cable 18 attached to the bottom surface of the top plate 15, a heat dissipation member 19 made of elastic and deformable material may be attached to the lower portion of the top plate 15.

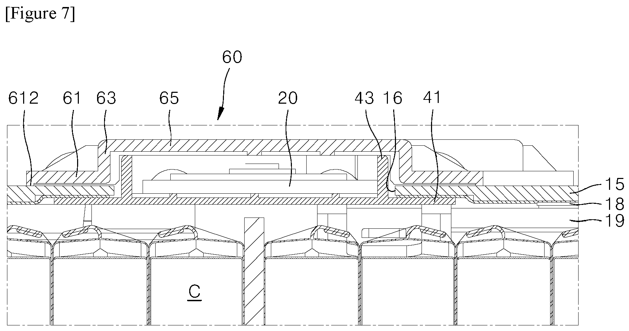

Inside the casing 10, as shown in FIG. 7, a plurality of pouch cells "C" may be accommodated in a vertically standing manner, and leads extending upward from the cells "C" may be electrically connected to bus bars. The assembly of the battery module 1 may then be finally completed by covering with the top plate assembly.

According to this battery module 1, the cell supervisory circuit and the battery control circuit may be wirelessly connected, thereby enabling the omission of the complicated wiring connecting the battery module 1 to the battery pack. As a result, the simpler structure and assembly of the battery pack is achieved, and accidents due to damage to the wiring may be prevented.

In addition, according to the battery module 1, the circuit board 20 is placed in the upper portion of the battery module 1 and an anti-noise groove 164 is provided on the top plate 15, thereby enabling the manufacturing of the casing of the battery module with metal to secure strength without disrupting the wireless communication between the cell supervisory circuit and the battery control circuit

In addition, by installing the lower housing 40 and the upper housing 60 at the top plate 15, it is possible to prevent external moisture from infiltrating the interior, and the gas leaked from the battery cells "C" from catching fire when coming into contact with outside air, thereby delaying or preventing fire even when gas leaks from the battery cells "C."

Moreover, since a circuit board 20 implemented with a cell supervisory circuit is installed on the top plate 15 of the battery module 1 by way of using a simple structure, the access to and disassembly of the circuit board 20 is facilitated, thereby making maintenance convenient.

The above-described embodiments should be understood in all respects as illustrative and not limiting, and the scope of the invention will be defined by the claims rather than the detailed description given above. In addition, all changes and modifications derived from the equivalent concept as well as the meaning and scope of the patent claims to be described later should be construed as being included in the scope of the claims.

As described above, while the present disclosure has been described with reference to the example drawings, the claims are not limited by the embodiments and drawings disclosed herein, and various modifications may be made by those skilled in the art within the scope of the technical idea of the present disclosure. In addition, although the effects according to the configuration of the present disclosure have not been explicitly described in the description of the embodiments of the present disclosure above, the effects predictable by the corresponding configuration should also be recognized.

## Claims

1. A top plate assembly covering an upper portion of a battery module, the top plate assembly comprising:
a top plate of metal material;
a circuit board accommodating hole provided in a portion of the top plate;
a circuit board accommodated in the circuit board accommodating hole;
a wireless communication antenna mounted on the circuit board; and
a housing of non-metal material accommodating and fixing the circuit board to the top plate,
wherein the circuit board accommodating hole is provided with an anti-noise groove formed by cutting out the top plate of the metal material to secure a predetermined separation distance from the wireless communication antenna.

2. The top plate assembly of claim 1, wherein the wireless communication antenna is mounted closest to a first portion of an outer edge of the circuit board.

3. The top plate assembly of claim 2, wherein the anti-noise groove is defined by a recessed portion at a second portion of an inner edge of the top plate defined by the circuit board accommodating hole adjacent to the first portion of the outer edge of the circuit board such that the second portion is further spaced apart from the outer edge of the circuit board.

4. The top plate assembly of claim 1, wherein a shape of an outer edge of the circuit board substantially corresponds to that of an inner edge of the top plate defined by the circuit board accommodating hole, and
the anti-noise groove is defined by a recessed portion at a portion of the inner edge of the top plate such that the portion of the inner edge is further spaced apart from that of the outer edge of the circuit board corresponding to the portion of the inner edge.

5. The top plate assembly of claim 1, wherein the separation distance is equal to or greater than 10mm.

6. The top plate assembly of claim 1, wherein the housing comprises:
a lower housing of resin material supporting a lower portion of the circuit board from a bottom surface of the top plate; and
an upper housing of resin material covering the circuit board and the circuit board accommodating holes from an upper surface of the top plate.

7. The top plate assembly of claim 6, wherein the lower housing covers a lower portion of the anti-noise groove, and
the upper housing covers an upper portion of the anti-noise groove.

8. The top plate assembly of claim 6, wherein the lower housing comprises:
a base member; and
an inner wall member extending upward from the base member and penetrating the top plate through the circuit board accommodating hole,
wherein the circuit board is accommodated in a space provided inside the inner wall member of the base member.

9. The top plate assembly of claim 8, wherein at least a portion of an outer side portion provided outside the inner wall member of the base member is fixed to a bottom surface of the top plate, and the outer side portion covers a lower portion of the anti-noise groove.

10. The top plate assembly of claim 8, wherein the base member is provided with an internal snap-fit extending upward from the base member,
the internal snap-fit having a locking portion provided at an upper end portion thereof protruding further inward than the inner wall member, and
the internal snap-fit being elastically fastened to an outer edge of the circuit board.

11. The top plate assembly of claim 8, wherein the base member is provided with an external snap-fit extending upward from the base member,
the external snap-fit having a locking portion provided at an upper end portion thereof protruding further outward than the inner wall member, and
the internal snap-fit being elastically fastened to an inner edge of the top plate defined by the circuit board accommodating hole.

12. The top plate assembly of claim 1, wherein a circuit board connector connected to a sensor detecting a temperature of the battery module is mounted at an edge of the circuit board, and
a connector accommodating groove formed by cutting out the top plate is provided at a portion of an inner edge of the top plate defined by the circuit board accommodating hole corresponding to an edge portion of the circuit board where the circuit board connector is mounted.

13. The top plate assembly of claim 12, wherein a top cable connecting the circuit board connector and the sensor is attached to a bottom surface of the top plate, and
the top cable comprises a fPCB cable disposed to evade the housing.

14. The top plate assembly of claim 12, wherein the housing comprises:
a lower housing of resin material supporting a lower portion of the circuit board from a bottom surface of the top plate; and
an upper housing of resin material covering the circuit board and the circuit board accommodating hole from an upper surface of the top plate,
wherein a groove exposing the connector accommodating groove is provided at a portion of the lower housing corresponding to the connector accommodating groove, and
the upper housing covers an upper portion of the connector accommodating groove.

15. The top plate assembly of claim 14, wherein the lower housing comprises:
a base member; and
an inner wall member extending upward from the base member and penetrating the top plate through the circuit board accommodating hole,
wherein the circuit board is accommodated in a space provided inside the inner wall member of the base member.
the groove exposing the connector accommodating groove has a shape where portions of the base member and the inner wall member are removed.

16. The top plate assembly of claim 8, wherein the upper housing comprises:
a seating member seated on the upper surface of the top plate;
an outer wall member extending upward from an inner portion of the seating member and surrounding the inner wall member of the lower housing; and
a cover member connected to an upper portion of the outer wall member and covering the circuit board and the circuit board accommodating hole.

17. The top plate assembly of claim 16, wherein a downward step is provided at a lower portion of an outer edge of the seating member.

18. The top plate assembly of claim 16, wherein the outer wall member is placed further outward than the inner wall member.

19. The top plate assembly of claim 16, wherein a fastening member penetrating the seating member and the top plate is fastened to the outer side portion provided on the outside of the inner wall member of the base member.

20. A top plate assembly covering an upper portion of a battery module, the top plate assembly comprising:
a top plate of metal material;
a circuit board accommodating hole provided in a portion of the top plate;
a circuit board accommodated in the circuit board accommodating hole;
a wireless communication antenna mounted on the circuit board; and
a housing of non-metal material accommodating and fixing the circuit board to the top plate,
wherein the housing comprises:
a lower housing of resin material supporting a lower portion of the circuit board from a bottom surface of the top plate; and
an upper housing of resin material covering the circuit board and the circuit board accommodating holes from an upper surface of the top plate, and
the lower housing comprises:
a base member; and
an inner wall member extending upward from the base member and penetrating the top plate through the circuit board accommodating hole,
wherein the inner wall member protrudes further upward than the upper surface of the top plate. and
the circuit board is accommodated in a space provided inside the inner wall member of the base member.

21. The top plate assembly of claim 20, wherein the base member is provided with an internal snap-fit extending upward from the base member,
the internal snap-fit having a locking portion provided at an upper end portion thereof protruding further inward than the inner wall member, and
the internal snap-fit being elastically fastened to an outer edge of the circuit board.

22. The top plate assembly of claim 20, wherein the base member is provided with an external snap-fit extending upward from the base member,
the external snap-fit having a locking portion provided at an upper end portion thereof protruding further outward than the inner wall member, and
the internal snap-fit being elastically fastened to an inner edge of the top plate defined by the circuit board accommodating hole.

23. The top plate assembly of claim 22, wherein at least a portion of an outer side portion provided outside the inner wall member of the base member of the lower housing is in contact with the bottom surface of the top plate.

24. The top plate assembly of claim 20, wherein the upper housing comprises:
a seating member seated on the upper surface of the top plate;
an outer wall member extending upward from an inner portion of the seating member and surrounding the inner wall member of the lower housing; and
a cover member connected to an upper portion of the outer wall member and covering an upper portion of the circuit board.

25. The top plate assembly of claim 24, wherein a downward step is provided at a lower portion of an outer edge of the seating member.

26. The top plate assembly of claim 24, wherein the outer wall member is placed further outward than the inner wall member.

27. The top plate assembly of claim 24, wherein a fastening member penetrating the seating member and the top plate is fastened to the outer side portion provided on the outside of the inner wall member of the base member.
